# EUROPEAN PATENT SPECIFICATION

(11) **EP 3 381 554 B1**
(45) Date of publication and mention of the grant of the patent: **17.02.2021**
(21) Application number: 16868657.4
(22) Date of filing: 25.11.2016
(51) Int. Cl.: B01J 31/22, B01J 37/04, C08F 8/04, B01J 31/02, B01J 31/06, B01J 31/12

(54) **CATALYST COMPOSITION FOR HYDROGENATION, METHOD FOR PRODUCING SAME AND A METHOD FOR PRODUCING HYDROGENATED POLYMER**
KATALYSATORZUSAMMENSETZUNG ZUR HYDRIERUNG, VERFAHREN ZUR HERSTELLUNG DAVON UND VERFAHREN ZUR HERSTELLUNG VON HYDRIERTEM POLYMER
COMPOSITION DE CATALYSEUR POUR HYDROGÉNATION, SON PROCÉDÉ DE PREPARATION ET PROCÉDÉ DE PRODUCTION DE POLYMÈRE HYDROGÉNÉ

(30) Priority: 27.11.2015 JP 2015232131
(43) Date of publication of application: 03.10.2018
(73) Proprietor: Asahi Kasei Kabushiki Kaisha, Tokyo 100-0006 (JP)
(72) Inventor: ARAKI, Yoshifumi, Tokyo 101-8101 (JP); NITTA, Katsunori, Tokyo 101-8101 (JP); SASAYA, Eiji, Tokyo 101-8101 (JP); TSUJI, Takahiro, Tokyo 101-8101 (JP)
(74) Representative: Strehl Schübel-Hopf & Partner
(86) International application number: PCT/JP2016/084931
(87) International publication number: WO 2017/090714

(56) References cited:
- EP-A1- 0 339 986
- EP-A1- 2 898 949
- EP-A1- 2 898 950
- EP-A1- 2 913 348
- WO-A1-2014/046016
- WO-A1-2014/046017
- WO-A1-2014/065283
- JP-A- H0 833 846
- JP-A- H0 833 846
- JP-A- H0 841 081
- JP-A- H0 841 081
- US-A- 5 270 274

## Description

### Technical Field

The present invention relates to a catalyst composition for hydrogenation, a method for producing the same, and a method for producing hydrogenated polymer.

### Background Art

As hydrogenation catalysts used in a hydrogenation step of hydrogenating a polymer having unsaturated double bonds, heterogeneous catalysts and homogeneous catalysts have been conventionally known. Various hydrogenation catalysts, as shown below, also have been developed.

For example, Patent Literatures 1 and 2 disclose a method in which a specific titanocene compound and alkyl lithium are combined to hydrogenate an olefin compound. Patent Literatures 3 and 4 disclose a method in which a metallocene compound is combined with organoaluminum, organozinc, organomagnesium, or the like to hydrogenate an olefinically unsaturated (co)polymer. Patent Literatures 5 and 6 disclose a method in which a specific titanocene compound and alkyl lithium are combined to hydrogenate olefinic double bonds of an unsaturated double bond-containing polymer.

Patent Literature 7 discloses a method in which olefinic double bonds in an unsaturated double bond-containing polymer are hydrogenated by a combination of a specific titanocene compound and alkoxy lithium. This method further requires an expensive organometal compound other than alkoxy lithium, as a reducing agent. Patent Literature 8 discloses a method in which an unsaturated double bond-containing polymer is hydrogenated by a combination of a specific titanocene compound, an olefin compound, and a reducing agent. Patent Literature 9 discloses a method in which a metallocene compound havingpentamethylcycloentadienyl groups of which all 5 hydrogen atoms in the cyclopentadienyl groups are replaced by methyl groups and a reducing agent are combined to hydrogenate an olefin compound.

Additionally, Patent Literatures 10 and 11 disclose a method in which a catalyst composition for hydrogenation containing a specific titanocene compound, a reducing agent, an olefinically unsaturated double bond-containing polymer, and a polar compound is used to hydrogenate an olefin compound. Patent Literature 12 discloses a method in which a catalyst composition for hydrogenation containing a compound selected from a specific metallocene compound, conjugated diene monomers, acetylenic compounds, and acetylenic monomers is used to hydrogenate an olefin compound. Patent Literature 13 discloses a method in which a catalyst composition for hydrogenation produced under predetermined conditions is used to hydrogenate an unsaturated double bond-containing polymer, wherein the catalyst composition for hydrogenation contains (A) a predetermined titanocene compound, (B) a compound containing a predetermined metal element, and (C) an unsaturated compound.

### Citation List

### Patent Literature

Patent Literature 1: Japanese Patent Laid-Open No. 61-33132
Patent Literature 2: Japanese Patent Laid-Open No. 1-53851
Patent Literature 3: Japanese Patent Laid-Open No. 61-28507
Patent Literature 4: Japanese Patent Laid-Open No. 62-209103
Patent Literature 5: Japanese Patent Laid-Open No. 61-47706
Patent Literature 6: Japanese Patent Laid-Open No. 63-5402
Patent Literature 7: Japanese Patent Laid-Open No. 1-275605
Patent Literature 8: Japanese Patent Laid-Open No. 2-172537
Patent Literature 9: Japanese Patent Laid-Open No. 4-96904
Patent Literature 10: Japanese Patent Laid-Open No. 08-33846
Patent Literature 11: Japanese Patent Laid-Open No. 08-41081
Patent Literature 12: Japanese Patent Laid-Open No. 2004-269665
Patent Literature 13: International Publication No. WO2014/065283

EP 2898950 A1 and EP 2913348 A1 disclose catalyst compositions for hydrogenation comprising substituted titanocene compounds.

### Summary of Invention

### Technical Problem

The heterogeneous catalysts aforementioned are widely used in industry, but have the following problems: the heterogeneous catalysts commonly have activity lower than that of homogeneous catalysts; a large amount of the catalysts is required to carry out desired hydrogenation reaction; the reaction has to be carried out at a high temperature and under a high pressure; and a higher cost is incurred. Meanwhile, homogeneous catalysts, with which hydrogenation reaction usually proceeds in a homogeneous system, are characterized in that the catalysts have higher activity, that the amount of the catalysts to be used is smaller, and that hydrogenation reaction can be carried out at a lower temperature and under a lower pressure in comparison with heterogeneous catalysts. Conversely, the homogeneous catalysts have the following problems: preparation of the catalysts is complicated; the stability of the catalysts themselves is low; the reproducibility is unsatisfactory; and side reaction is likely to concurrently occur. Moreover, when an alkyl-substituted olefinically unsaturated double bond having steric hindrance is hydrogenated, sufficient hydrogenation activity is unlikely to be achieved. Here, although an increase in an amount of such a catalyst to be added can enhance the hydrogenation activity, the following problem occurs: metal particles derived from the catalyst are dispersed in the product to cause white turbidity and thus use of the product in transparent resin or the like is difficult. More specifically, although a hydrogenated polymer having a certain level of transparency can be produced even when a conventional catalyst is used, it is difficult to produce a hydrogenated polymer that is cloudless enough to be used in transparent films for optical applications, for example.

Alternatively, the hydrogenation activity can be enhanced by carrying out hydrogenation reaction at an elevated temperature instead of increasing an amount of the catalyst to be added, but a target polymer chain becomes easily cut and the molecular weight of the polymer may change before and after the hydrogenation reaction.

Accordingly, development of a hydrogenation catalyst that has high activity, is easy to handle, and causes lesser side reactions is strongly desired. As aforementioned, there is a demand for a catalyst composition for hydrogenation that does not require a large amount of a hydrogenation catalyst and can produce a hydrogenated polymer cloudless enough to be used particularly in transparent films for optical applications.

However, high hydrogenation activity cannot be achieved using any of the catalysts and hydrogenation methods disclosed in Patent Literatures 1 to 13 aforementioned.

It is thus an object of the present invention to provide a catalyst composition for hydrogenation having high hydrogenation activity.

### Solution to Problem

The present inventors have made extensive studies to solve the aforementioned problems of the related art and, as a result, have found that use of a catalyst composition for hydrogenation that contains an organometal compound containing titanocene dichloride and a predetermined metal element, an unsaturated compound, and a polar compound and has a content ratio of the unsaturated compound and polar compound to the titanocene dichloride in a predetermined range provides high hydrogenation activity, having completed the present invention.

That is, the present invention is as described by the appended claims.

### Advantageous Effects of Invention

The catalyst composition for hydrogenation according to the present invention can carry out hydrogenation reaction with high activity.

### Description of Embodiments

Hereinbelow a mode for carrying out the present invention (hereinbelow, referred to as "the present embodiment") will be described in detail. The following present embodiment is provided for illustrating the present invention and is not intended to limit the present invention to the contents below. The present invention can be properly modified and practiced within the scope of the claims.

### [Catalyst composition for hydrogenation]

The catalyst composition for hydrogenation of the present embodiment comprises titanocene dichloride (hereinbelow, also referred to as "titanocene dichloride (A)", "component (A)", or "(A)"), an organometal compound comprising one or two or more elements selected from the group consisting of Li, Na, K, Mg, Zn, Al, and Ca (hereinbelow, also referred to as "organometal compound (B)", "component (B)", or "(B)"), an unsaturated compound (hereinbelow, also referred to as "unsaturated compound (C)", "component (C)", or "(C)"), and a polar compound (hereinbelow, also referred to as "polar compound (D)", "component (D)", or "(D)"). The content ratio, which is a molar ratio, of (C) to (A) (= (C)/(A)) is 0.1 or more and 8.0 or less, and the content ratio, which is a molar ratio, of (D) to (A) (= (D)/(A)) is 0.01 or more and 2.0 or less.

### (Component (A): titanocene dichloride)

The titanocene dichloride (A) of the present embodiment is a compound comprising titanocene dichloride as a main component. The phrase "comprising as a main component" herein refers to comprising the component in an amount of 93% by mass or more, preferably 97% by mass or more, more preferably 98% by mass or more.

The catalyst composition for hydrogenation of the present embodiment, which comprises titanocene dichloride (A) of which cyclopentadienyl groups have no substituent, has higher catalytic activity of hydrogenation reaction than the activity when a conventional titanocene compound having a substituent is used. The catalyst thus is likely to allow hydrogenation reaction to proceed at a low temperature. Accordingly, the molecular chain of the target compound is unlikely to be cut, and the change in the molecular weight distribution of the target compound before and after hydrogenation reaction is suppressed.

From the viewpoint of the high hydrogenation activity and a small change in the molecular weight distribution of a polymer before and after hydrogenation, the concentration of chlorine in the component (A) is preferably 28.29% by mass or more and 28.51% by mass or less, more preferably 28.35% by mass or more and 28.50% by mass or less, still more preferably 28.40% by mass or more and 28.47% by mass or less, even still more preferably 28.42% by mass or more and 28.46% by mass or more.

A method for producing the titanocene dichloride in the component (A) is not particularly limited, and examples thereof include a method in which a halogenated metal compound is allowed to react with an alkali metal salt of cyclopentadiene or a Grignard reagent (see J. Am. Chem. Soc, 76, 4881 (1954) and Japanese Patent Publication No. 63-60028), a method in which a halogenated metal compound is allowed to react with a cyclopentadienyl compound in a solvent containing ethylene glycol dimethyl ethers and amines, and a method including washing a reaction product with aliphatic alcohol (Japanese Patent Laid-Open No. 06-41169).

Titanocene dichloride has a theoretical value of chlorine concentration of 28.47% by mass, but the concentration often varies at around 28.47% by mass of the theoretical value due to incorporation of an excessively reduced product of a Ti compound and a reaction product of the solvent and halogen or contamination from a metal vessel during production, depending on production conditions. The chlorine concentration of the component (A) can be controlled by means of the reaction time and reaction temperature on production, for example.

From the viewpoint of reducing the change in the molecular weight distribution of the polymer before and after a hydrogenation step, the content of iron in the component (A) is preferably 0.01% by mass or less.

### (Component (B): organometal compound)

The organometal compound (B) of the present embodiment is an organometal compound comprising one or two or more elements selected from the group consisting of Li, Na, K, Mg, Zn, Al, and Ca and having reducibility. As the component (B), one type may be used singly, or two or more types may be used in combination.

Examples of the organolithium compound as the component (B) include, but are not limited to, methyl lithium, ethyl lithium, n-propyl lithium, isopropyl lithium, n-butyl lithium, sec-butyl lithium, isobutyl lithium, t-butyl lithium, n-pentyl lithium, n-hexyl lithium, phenyl lithium, cyclopentadienyl lithium, m-tolyl lithium, p-tolyl lithium, xylyl lithium, dimethylamino lithium, diethylamino lithium, methoxy lithium, ethoxy lithium, n-propoxy lithium, isopropoxy lithium, n-butoxy lithium, sec-butoxy lithium, t-butoxy lithium, pentyloxy lithium, hexyloxy lithium, heptyloxy lithium, octyloxy lithium, phenoxy lithium, 4-methylphenoxy lithium, benzyloxy lithium, and 4-methylbezyloxy lithium. Also as the component (B), lithium phenolate compounds, which can be obtained by allowing a phenolic stabilizer to react with one of various organolithium described above, may be used.

Examples of the phenolic stabilizer include, but are not limited to, 1-oxy-3-methyl-4-isopropyl benzene, 2,6-di-t-butylphenol, 2,6-di-t-butyl-4-ethylphenol, 2,6-di-t-butyl-p-cresol, 2,6-di-t-butyl-4-n-butylphenol, 4-hydroxymethyl-2,6-di-t-butylphenol, butylhydroxyanisole, 2-(1-methylcyclohexyl)-4,6-dimethylphenol, 2,4-dimethyl-6-t-butylphenol, 2-methyl-4,6-dinonylphenol, 2,6-di-t-butyl-α-dimethylamino-p-cresol, methylene-bis-(dimethyl-4,6-phenol), 2,2'-methylene-bis-(4-methyl-6-t-butylphenol), 2,2'-methylene-bis-(4-methyl-6-cyclohexylphenol), 2,2'-methylene-bis-(4-ethyl-6-t-butylphenol), 4,4'-methylene-bis-(2,6-di-t-butylphenol), and 2,2'-methylene-bis-(6-α-methyl-benzyl-p-cresol). Of these, 2,6-di-t-butyl-4-methylphenoxy lithium is preferred, which is prepared by substituting the hydroxyl group of the most general-purpose 2,6-di-t-butyl-p-cresol with -OLi.

Other examples of the organolithium compound as the component (B) include organosilicon lithium compounds such as trimethylsilyl lithium, diethylmethylsilyl lithium, dimethylethylsilyl lithium, triethylsilyl lithium, and triphenylsilyl lithium, in addition to those described above.

Examples of an organosodium compound as the component (B) include, but are not limited to, methyl sodium, ethyl sodium, n-propyl sodium, isopropyl sodium, n-butyl sodium, sec-butyl sodium, isobutyl sodium, t-butyl sodium, n-pentyl sodium, n-hexyl sodium, phenyl sodium, cyclopentadienyl sodium, m-tolyl sodium, p-tolyl sodium, xylyl sodium, and sodium naphthalene.

Examples of an organopotassium compound as the component (B) include, but are not limited to, methyl potassium, ethyl potassium, n-propyl potassium, isopropyl potassium, n-butyl potassium, sec-butyl potassium, isobutyl potassium, t-butyl potassium, n-pentyl potassium, n-hexyl potassium, triphenylmethyl potassium, phenyl potassium, phenylethyl potassium, cyclopentadienyl potassium, m-tolyl potassium, p-tolyl potassium, xylyl potassium, and potassium naphthalene.

Examples of an organomagnesium compound as the component (B) include, but are not limited to, dimethyl magnesium, diethyl magnesium, dibutyl magnesium, ethylbutyl magnesium, methyl magnesium bromide, methyl magnesium chloride, ethyl magnesium bromide, ethyl magnesium chloride, phenyl magnesium bromide, phenyl magnesium chloride, t-butyl magnesium chloride, and t-butyl magnesium bromide.

Examples of an organozinc compound as the component (B) include, but are not limited to, diethyl zinc, bis(η(5)-cyclopentadienyl)zinc, and diphenyl zinc.

Examples of an organoaluminum compound as the component (B) include, but are not limited to, trimethyl aluminum, triethyl aluminum, triisobutyl aluminum, triphenyl aluminum, diethyl aluminum chloride, dimethyl aluminum chloride, ethyl aluminum dichloride, methyl aluminum sesquichloride, ethyl aluminum sesquichloride, diethyl aluminum hydride, diisobutyl aluminum hydride, triphenyl aluminum, tri(2-ethylhexyl)aluminum, (2-ethylhexyl)aluminum dichloride, methyl aluminoxane, and ethyl aluminoxane.

Complexes synthesized by allowing an organic alkali metal compound as described above (an organolithium compound, organosodium compound, or organopotassium compound) to react with an organoaluminum compound in advance, complexes synthesized by allowing an organic alkali metal compound to react with an organomagnesium compound in advance (ate complexes), and the like can also be used as the component (B). As the component (B), compounds comprising Li or Al are preferred from the viewpoint of the high hydrogenation activity and a small change in the molecular weight distribution of the polymer before and after hydrogenation. Examples of the compound comprising Li or Al include triethyl aluminum, triisobutyl aluminum, sec-butyl lithium, and n-butyl lithium as preferred compounds.

Examples of the component (B) component, in addition to those described above, include alkali (earth) metal hydrides such as lithium hydride, potassium hydride, sodium hydride, and calcium hydride; and hydrides containing two or more metals such as sodium aluminum hydride, potassium aluminum hydride, diisobutyl sodium aluminum hydride, tri(t-butoxy)aluminum hydride, triethyl sodium aluminum hydride, diisobutyl sodium aluminum hydride, triethyl sodium aluminum hydride, triethoxy sodium aluminum hydride, and triethyl lithium aluminum hydride.

The component (B) may be used as a living anionic polymerization initiator for a conjugated diene compound and/or vinyl aromatic hydrocarbon compound. When an olefin compound, which is the target to be hydrogenated, is a conjugated diene-based polymer or a copolymer of a conjugated diene and a vinyl aromatic hydrocarbon that has active terminals of the metal comprised in the component (B) (living polymer), these active terminals also can serve as the component (B).

The component (B) is more preferably an organolithium compound from a viewpoint of the hydrogenation activity of the catalyst composition for hydrogenation at the initial stage of preparation and after storage and high hydrogenation activity when a polymer of which conjugated diene before hydrogenation has a vinyl content of 50 mol% or more is hydrogenated. Particularly, the vinyl content in the conjugated diene is preferably 60 mol% or more, more preferably 70 mol% or more.

### (Component (C): unsaturated compound)

The unsaturated compound (C) of the present embodiment is a compound having at least one olefinically unsaturated group in its molecule.

From the viewpoint of being capable of hydrogenating an olefinically unsaturated double bond-containing compound in an economically advantageous manner, excellent storage stability, and good feed properties and being capable of producing a polymer having excellent non-coloration properties in the hydrogenation step, the component (C) is an unsaturated polymer (C1) (hereinafter, also referred to as "component (C1)" or "(C1)") having a ratio of an olefinically unsaturated double bond content of side chains of the component (C) to a total olefinically unsaturated double bond content of the component (C) of 0.25 or more and 1.00 or less.

As described below, from the viewpoint of being capable of hydrogenating an olefinically unsaturated double bond-containing compound (including polymers containing olefinically unsaturated double bonds) in an economically advantageous manner, excellent storage stability, and good feed properties and being capable of producing a polymer having excellent non-coloration properties in the hydrogenation step, the component (C) is also an unsaturated compound (C2) (hereinafter, "component (C2)" or "(C2)") having one or more unsaturated groups in its molecule and a molecular weight of 400 or less.

The component (C) can be produced using predetermined monomers. Examples of the predetermined monomers include conjugated dienes, and examples of the conjugated diene include conjugated dienes having 4 to about 12 hydrocarbons. Specific examples of the conjugated diene include, but are not limited to, 1,3-butadiene, isoprene, 2,3-dimethyl butadiene, 1,3-pentadiene, 2-methyl-1,3-pentadiene, 1,3-hexadiene, 4,5-diethyl-1,3-octadiene, and 3-butyl-1,3-octadiene. These monomers may be polymerized singly or two or more of these may be copolymerized to be the component (C). Of these, 1,3-butadiene and isoprene, which enable the component (C1) to be industrially mass-produced and are easy to handle, are preferred, and polybutadiene, polyisoprene, and butadiene/isoprene copolymers, which are homopolymers or copolymers of these, are preferred. The component (C) may be one obtained by homopolymerizing norbornadiene, cyclopentadiene, 2,3-dihydrodicyclopentadiene, or an alkyl-substituted product of these or by copolymerizing two or more of these.

The component (C1)
is preferably a conjugated diene-based polymer or a copolymer of a conjugated diene and an aromatic vinyl compound, from the viewpoint of enhancing the ratio of the olefinically unsaturated double bond content of side chains. The aromatic vinyl compound is not particularly limited, and examples thereof include styrene, t-butylstyrene, α-methylstyrene, p-methylstyrene, divinylbenzene, 1, 1-diphenylethylene, and N,N-diethyl-p-aminoethylstyrene. Of these, styrene is preferred.

Specific examples of the copolymer suitably include butadiene/styrene copolymers and isoprene/styrene copolymers. These copolymers may be a copolymer in any form, such as random, block, star-shaped block, or a tapered block and are not particularly limited.

When the component (C1) is a copolymer of a conjugated diene and an aromatic vinyl compound, the amount of the aromatic vinyl compound bonded is preferably 70% by mass or less.

The component (C1) may have a functional group such as a hydroxyl group, a carboxyl group, an amino group, or an epoxy group.

From the viewpoint of the hydrogenation activity, handling, feed properties, and storage stability of the catalyst composition for hydrogenation of the present embodiment, the number average molecule weight of the component (C1) is more than 400, more preferably 500 or more. The number average molecular weight is preferably 1,000,000 or less from the viewpoint of handling. The number average molecular weight of the component (C1) is more preferably 500 or more and 20,000 or less, still more preferably 800 or more and 15,000 or less, still even more preferably 1,000 or more and 10,000 or less. The number average molecular weight of the component (C1) (value in terms of polystyrene) can be measured by gel permeation chromatography (GPC).

The term "good feed properties" in the present embodiment refers to, when feeding a catalyst composition for hydrogenation via a predetermined pipe after storing the catalyst composition for a certain period of time under a predetermined environment, the ability to continuously maintain a smooth feed state without clogging of the pipe. The term "good handling" refers to having a low viscosity when in solution, high mixing properties and rate of transfer, and low adhesion to devices, piping or the like.

From the viewpoint of the hydrogenation activity, handling (lowering the viscosity of a solution), and storage stability regarding feed properties of the catalyst composition for hydrogenation prepared by the production method of the present embodiment, and a low degree of filter clogging in an extruder upon preparation and production of a hydrogenated unsaturated double bond-containing compound, the component (C1) comprises a ratio of an olefinically unsaturated double bond content of the side chains described above of 0.25 or more and 1.00 or less.

The ratio of the olefinically unsaturated double bond content of the side chains to the total olefinically unsaturated double bond content is defined as X = Y/Z, wherein X represents "the ratio of an olefinically unsaturated double bond content of the side chains to the total olefinically unsaturated double bond content", Y represents [the number of olefinically unsaturated carbon-carbon double bonds of the side chains of the component (C1)], and
Z represents [the total number of olefinically unsaturated carbon-carbon double bonds of the component (C1)]. The value of X is in a range of 0.25 or more to 1.00. This value range means that, when polybutadiene is used as a specific example of the component (C1), the ratio of an olefinically unsaturated double bond content of the side chains (1,2-bonds) to a total olefinically unsaturated double bond content (cis 1,4-bonds, trans-1,4 bonds, and 1,2-bonds) is in a range of 0.25 or more to 1.00 (25 to 100 mol%). X is more preferably 0.40 or more and 1.00 or less, still more preferably 0.50 or more and 0.95 or less, even still more preferably 0.60 or more and 0.95 or less. X, which is the ratio of the olefinically unsaturated double bond content of the side chains, can be determined by measuring the component (C) by means of NMR.

The content ratio (molar ratio) of the component (C1) to the component (A) aforementioned ((C1) / (A)) is 0.1 or more and 8.0 or less. From the viewpoint of the hydrogenation activity, handling, and storage stability regarding feed properties of the catalyst composition for hydrogenation prepared by the production method of the present embodiment, the content ratio ((C1) / (A)) (molar ratio) is 0.1 or more, preferably 0.3 or more. From the viewpoint of the storage stability regarding feed properties, economical efficiency, and suppression of the yellowing of a hydrogenated polymer that has been hydrogenated with the catalyst composition for hydrogenation, the content ratio ((C1) / (A)) (molar ratio) is preferably 8.0 or less, more preferably 4.0 or less, still more preferably 3.0 or less, and even still more preferably 2.0 or less. The content ratio ((C1) / (A)) (molar ratio) is preferably 0.4 or more to 5.0, more preferably 0.5 or more to 3.0, still more preferably 0.7 or more and 2.0 or less.

From the viewpoint of the hydrogenation activity, handling (lowering the viscosity), and storage stability regarding feed properties of the catalyst composition for hydrogenation produced by the production method of the present embodiment, the total olefinically unsaturated double bond content (mol) of the side chains in the entire component (C1), the unsaturated polymer, per mol of the component (A), the titanocene compound, is preferably 0.3 mol or more, and from viewpoint of suppression of the yellowing of the polymer, the content is preferably 30 mol or less, more preferably 0.5 mol or more and 20 mol or less, still more preferably 1.0 mol or more and 15 mol or less, even still more preferably 2.0 mol or more and 12 mol or less.

As aforementioned, from the viewpoint of being capable of hydrogenating an olefinically unsaturated double bond-containing compound (including polymers containing olefinically unsaturated double bonds) in an economically advantageous manner, excellent storage stability, good feed properties, and being capable of producing a polymer having excellent non-coloration properties in the hydrogenation step, a compound (C2) having one or more unsaturated groups in its molecule and having a molecular weight of 400 or less also can be used as the component (C). From the viewpoint of the feed properties after storage of the catalyst composition for hydrogenation, the component (C2) comprises a molecular weight of 400 or less, preferably 300 or less, more preferably 200 or less, still more preferably 150 or less. The lower limit of the molecular weight is not particularly limited and is preferably 50 or more.

The component (C2) is a monomer selected from conjugated dienes having 4 to 12 carbon atoms, such as 1,3-butadiene, isoprene, 2,3-dimethylbutadiene, 1,3-pentadiene, 2-methyl-1,3-pentadiene, 1,3-hexadiene, 4,5-diethyl-1,3-octadiene, and 3-butyl-1,3-octadiene, monoterpene, vinyl aromatic compounds, norbornadiene, cyclopentadiene, cyclohexadiene, 2,3-dihydrodicyclopentadiene, and acetylenes. The component (C2) may be a polymer prepared by polymerizing these monomers. One type of these monomers may be used singly for polymerization, or two or more types of these may be used in combination for copolymerization.

From the viewpoint of the hydrogenation activity of the catalyst composition for hydrogenation obtained by the method for producing a catalyst composition for hydrogenation of the present embodiment at the initial stage of preparation and after storage, and a low degree of filter clogging in an extruder upon preparation and production of a hydrogenated unsaturated double bond-containing compound, the preferred range of the amount of unsaturated groups in the compound (C2) is determined. That is, from the viewpoint of the hydrogenation activity of the catalyst composition for hydrogenation at the initial stage of preparation and after storage, and a low degree of filter clogging in an extruder upon the preparation of a hydrogenated unsaturated double bond-containing compound, the amount of unsaturated groups per mol of the component (C2) is preferably 2 mol or more. From the viewpoint of the hydrogenation activity and feed properties of the catalyst composition for hydrogenation at the initial stage of preparation and after storage, a low degree of filter clogging in an extruder upon the preparation of a hydrogenated unsaturated double bond-containing compound, and suppression of the yellowing of the polymer of the hydrogenated olefin compound, the amount is preferably 5 mol or less, more preferably 2 mol or more and 4 mol or less, still more preferably 2 mol or more and 3 mol or less, even still more preferably 3 mol. The amount of unsaturated groups in (C2) can be measured by NMR.

From the viewpoint of the hydrogenation activity, handling, and storage stability regarding feed properties of the catalyst composition for hydrogenation prepared by the production method of the present embodiment, the content ratio of the component (C2) to the component (A) ((C2)/(A)) (molar ratio) is 0.1 or more, and from the viewpoint of the storage stability regarding feed properties, economical efficiency, and suppression of the yellowing of a hydrogenated polymer that has been hydrogenated with the catalyst composition for hydrogenation, the content ratio (molar ratio) is 8.0 or less. From the viewpoint of the hydrogenation activity, handling, storage stability regarding feed properties, and economical efficiency of the catalyst composition for hydrogenation to be prepared, and suppression of the yellowing of a hydrogenated polymer, the content ratio ((C2)/(A)) (molar ratio) is 0.1 or more and 8.0 or less, preferably 0.1 or more and 4.0 or less, more preferably 0.5 or more and 3.0 or less, still more preferably 1.0 or more and 2.5 or less.

As aforementioned, by using the component (C2) as the compound (C), the catalyst composition for hydrogenation prepared by the production method of the present embodiment has excellent storage stability, good feed properties, and excellent feed properties even after the storage thereof. In addition, by setting the amount of unsaturated groups in the component (C2) within the aforementioned range based on the molar ratio of the component (C2) to the component (A), the amount of hydrogen added to those other than the olefinically unsaturated double bonds in the polymer as a target to be hydrogenated can be reduced, and as a result, high hydrogenation activity can be obtained.

As the component (C), the component (C1) and the component (C2) may be used in combination, or a component (C) other than the component (C1) and the component (C2) may be used.

### (Component (D): polar compound)

The polar compound (D) of the present embodiment is a compound comprising an element N, O, or S, and is selected from alcohol compounds, ether compounds, thioether compounds, ketone compounds, sulfoxide compounds, carboxylic acid compounds, carboxylate compounds, aldehyde compounds, lactam compounds, lactone compounds, amine compounds, amide compounds, nitrile compounds, epoxy compounds, and oxime compounds.

Examples of the alcohol compound include, but are not limited to, monohydric alcohols such as methyl alcohol, ethyl alcohol, propyl alcohol, n-butyl alcohol, sec-butyl alcohol, isobutyl alcohol, tert-butyl alcohol, n-amyl alcohol, isoamyl alcohol, hexyl alcohol and isomers thereof, heptyl alcohol and isomers thereof, octyl alcohol and isomers thereof, capryl alcohol, nonyl alcohol and isomers thereof, decyl alcohol and isomers thereof, benzyl alcohol, phenol, cresol, and 2,6-di-tert-butyl-p-cresol, and glycols (dihydric alcohols) such as ethylene glycol, propylene glycol, butanediol, pentyl glycol, hexyl glycol, heptyl glycol, and isomers thereof. Additionally, the alcohol compound may be trihydric alcohols such as glycerin, or alcohol compounds having another functional group in a single molecule thereof, such as ethanolamine or glycidyl alcohol.

Examples of the ether compound include, but are not limited to, dimethyl ether, diethyl ether, di-n-propyl ether, diisopropyl ether, di-n-butyl ether, di-sec-butyl ether, diphenyl ether, methylethyl ether, ethylbutyl ether, butylvinyl ether, anisole, ethylphenyl ether, ethylene glycol dimethyl ether, ethylene glycol diethyl ether, ethylene glycol dibutyl ether, diethylene glycol dimethyl ether, diethylene glycol diethyl ether, furan, tetrahydrofuran, α-methoxy tetrahydrofuran, pyran, tetrahydropyran, and dioxane. The ether compound may be a compound having another functional group in a molecule thereof, such as tetrahydrofurancarboxylic acid.

Examples of the thioether compound include, but are not limited to, dimethyl sulfide, diethyl sulfide, di-n-butyl sulfide, di-sec-butyl sulfide, di-tert-butyl sulfide, diphenyl sulfide, methyl ethyl sulfide, ethyl butyl sulfide, thioanisole, ethyl phenyl sulfide, thiophene, and tetrahydrothiophene.

Examples of the ketone compound include, but are not limited to, acetone, diethyl ketone, di-n-propyl ketone, diisopropyl ketone, di-n-butyl ketone, di-sec-butyl ketone, di-tert-butyl ketone, benzophenone, methyl ethyl ketone, acetophenone, benzyl phenyl ketone, propiophenone, cyclopentanone, cyclohexanone, diacetyl, acetyl acetone, and benzoyl acetone.

Examples of the sulfoxide compound include, but are not limited to, dimethyl sulfoxide, diethyl sulfoxide, tetramethylene sulfoxide, pentamethylene sulfoxide, diphenyl sulfoxide, dibenzyl sulfoxide, and p-tolyl sulfoxide.

Examples of the carboxylic acid compound include, but are not limited to, monobasic acids such as formic acid, acetic acid, propionic acid, butyric acid, caproic acid, lauric acid, palmitic acid, stearic acid, cyclohexylpropionic acid, cyclohexylcaproic acid, benzoic acid, phenylacetic acid, o-toluic acid, m-toluic acid, p-toluic acid, acrylic acid, and methacrylic acid; dibasic acids such as oxalic acid, maleic acid, malonic acid, fumaric acid, succinic acid, adipic acid, pimelic acid, suberic acid, sebacic acid, itaconic acid, phthalic acid, isophthalic acid, terephthalic acid, naphthalic acid, and diphenic acid; polybasic acid such as trimellitic acid and pyromellitic acid; and derivatives thereof. The carboxylic acid compound may be a compound having another functional group in a single molecule thereof, such as hydroxybenzoic acid.

Examples of the carboxylate include, but are not limited to, esters formed from a monobasic acid such as formic acid, acetic acid, propionic acid, butyric acid, caproic acid, lauric acid, palmitic acid, stearic acid, cyclohexylpropionic acid, cyclohexylcaproic acid, benzoic acid, phenylacetic acid, o-toluic acid, m-toluic acid, p-toluic acid, acrylic acid, or methacrylic acid, or a dibasic acid such as oxalic acid, maleic acid, malonic acid, fumaric acid, succinic acid, adipic acid, pimelic acid, suberic acid, sebacic acid, itaconic acid, phthalic acid, isophthalic acid, terephthalic acid, naphthalic acid, or diphenic acid, with an alcohol such as methyl alcohol, ethyl alcohol, propyl alcohol, n-butyl alcohol, sec-butyl alcohol, isobutyl alcohol, tert-butyl alcohol, n-amyl alcohol, isoamyl alcohol, hexyl alcohol or an isomer thereof, heptyl alcohol or an isomer thereof, octyl alcohol or an isomer thereof, capryl alcohol, nonyl alcohol or an isomer thereof, decyl alcohol or an isomer thereof, benzyl alcohol, phenol, cresol, or glycidyl alcohol; and β-ketoesters such as methyl acetoacetate and ethyl acetoacetate.

Examples of the lactone compound include, but are not limited to, β-propiolactone, δ-valerolactone, ε-caprolactone, and lactone compounds corresponding to the following acids. That is, examples of the acid include 2-methyl-3-hydroxypropionic acid, 3-hydroxynonane or 3-hydroxypelargonic acid, 2-dodecyl-3-hydroxypropionic acid, 2-cyclopentyl-3-hydroxypropionic acid, 2-n-butyl-3-cyclohexyl-3-hydroxypropionic acid, 2-phenyl-3-hydroxytridecanoic acid, 2-(2-ethylcyclopentyl)-3-hydroxypropionic acid, 2-methylphenyl-3-hydroxypropionic acid, 3-benzyl-3-hydroxypropionic acid, 2,2-dimethyl-3-hydroxypropionic acid, 2-methyl-5-hydroxyvaleric acid, 3-cyclohexyl-5-hydroxyvaleric acid, 4-phenyl-5-hydroxyvaleric acid, 2-heptyl-4-cyclopentyl-5-hydroxyvaleric acid, 3-(2-cyclohexylethyl)-5-hydroxyvaleric acid, 2-(2-phenyl ethyl)-4-(4-cyclohexyl benzyl)-5-hydroxyvaleric acid, benzyl-5-hydroxyvaleric acid, 3-ethyl-5-isopropyl-6-hydroxycaproic acid, 2-cyclopentyl-4-hexyl-6-hydroxycaproic acid, 2-cyclopentyl-4-hexyl-6-hydroxycaproic acid, 3-phenyl-6-hydroxycaproic acid, 3-(3,5-diethyl-cyclohexyl)-5-ethyl-6-hydroxycaproic acid, 4-(3-phenyl-propyl)-6-hydroxycaproic acid, 2-benzyl-5-isobutyl-6-hydroxycaproic acid, 7-phenyl-6-hydroxyl-octoenoic acid, 2,2-di(1-cyclohexenyl)-5-hydroxy-5-heptenoic acid, 2,2-dipropenyl-5-hydroxy-5-heptenoic acid, and 2,2-dimethyl-4-propenyl-3-hydroxy-3,5-heptadienoic acid.

Examples of the amine compound include, but are not limited to, methylamine, ethylamine, isopropylamine, n-butylamine, sec-butylamine, tert-butylamine, n-amylamine, sec-amylamine, tert-amylamine, n-hexylamine, n-heptylamine, aniline, benzylamine, o-anisidine, m-anisidine, p-anisidine, α-naphthylamine, dimethylamine, diethylamine, di-n-propylamine, diisopropylamine, di-n-butylamine, di-sec-butylamine, diisobutylamine, di-tert-butylamine, di-n-amylamine, diisoamylamine, dibenzylamine, N-methylaniline, N-ethylaniline, N-ethyl-o-toluidine, N-ethyl-m-toluidine, N-ethyl-p-toluidine, triethylamine, tri-n-propylamine, tri-n-butylamine, tri-n-amylamine, triisoamylamine, tri-n-hexylamine, tribenzylamine, triphenyl methylamine, N,N-dimethylbenzylamine, N,N-dimethylaniline, N,N-diethylaniline, N,N-diethyl-o-toluidine, N,N-diethyl-m-toluidine, N,N-diethyl-p-toluidine, N,N-dimethyl-α-naphthylamine, N,N,N',N'-tetramethylethylenediamine, N,N,N',N'-tetraethylethylenediamine, pyrrolidine, piperidine, N-methylpyrrolidine, N-methylpiperidine, pyridine, piperazine, 2-acetylpyridine, N-benzylpiperazine, quinoline, and morpholine.

The amide compound is a compound having at least one bond of -C(= O)-N < or -C(= S)-N < in a molecule thereof. Examples of the amide compound include, but are not limited to, N,N-dimethylformamide, N-dimethylacetamide, N-methylpyrrolidone, acetamide, propionamide, benzamide, acetanilide, benzanilide, N-methylacetanilide, N,N-dimethylthioformamide, N,N-dimethyl-N,N'-(p-dimethylamino)benzamide, N-ethylene-N-methyl-8-quiniline carboxyamide, N,N-dimethyl nicotinamide, N,N-dimethylmetacrylamide, N-methylphthalimide, N-phenylphthalimide, N-acetyl-ε-caprolactam, N,N,N',N'-tetramethylphthalamide, 10-acetylphenoxazine, 3,7-bis(dimethylamino)-10-benzoylphenothiazine, 10-acetylphenothiazine, 3,7-bis)dimethylamino)-10-benzoylphenothiazine, N-ethyl-N-methyl-8-quinolinecarboxamide, and also, linear urea compounds such as N,N'-dimethylurea, N,N'-diethylurea, N,N'-dimethylethyleneurea, N,N,N',N'-tetramethylurea, N,N-dimethyl-N',N'-diethylurea and N,N-dimethyl-N',N'-diphenylurea.

Examples of the epoxide compound include, but are not limited to, 1,3-butadiene monoxide, 1,3-butadiene oxide, 1,2-butylene oxide, 2,3-butylene oxide, cyclohexene oxide, 1,2-epoxycyclododecane, 1,2-epoxydecane, 1,2-epoxyeicosane, 1,2-epoxyheptane, 1,2-epoxyhexadecane, 1,2-epoxyhexadecane, 1,2-epoxyoctadecane, 1,2-epoxyoctane, ethylene glycol diglycidyl ether, 1,2-epoxytetradecane, hexamethylene oxide, isobutylene oxide, 1,7-octadiene epoxide, 2-phenylpropylene oxide, propylene oxide, trans-stilbene oxide, styrene oxide, epoxylated 1,2-polybutadiene, epoxylated linseed oil, glycidyl methyl ether, glycidyl n-butyl ether, glycidyl allyl ether, glycidyl methacrylate, and glycidyl acrylate.

Examples of the oxime compound include, but are not limited to, acetoxime, methyl ethyl ketone oxime, diethyl ketone oxime, acetophenone oxime, benzophenone oxime, benzyl phenyl ketone oxime, cyclopentanone oxime, cyclohexanone oxime, and benzaldehyde oxime.

As the component (D) aforementioned, one type may be used singly, or two or more types may be used in combination.

As the component (D), polar compounds having no active hydrogen are preferred, from the viewpoint of the high hydrogenation activity and a small change in the molecular weight distribution of the polymer before and after hydrogenation. Of these, compounds having two polar groups are preferred. Of these, amine compounds and ether compounds are more preferred, and amine compounds are still more preferred.

From the viewpoint of the high hydrogenation activity of the catalyst composition for hydrogenation prepared by the production method of the present embodiment at the initial stage of preparation and after storage, and a low degree of filter clogging in an extruder upon preparation and production of a hydrogenated unsaturated double bond-containing compound, the content ratio (molar ratio) of the component (D) to the component (A) ((D)/(A)) is 0.01 or more, and from the viewpoint of storage stability and economical efficiency, the content ratio (molar ratio) is 2.00 or less. The content ratio (molar ratio) ((D)/(A)) is preferably 0.01 or more to 1.00, more preferably 0.010 or more and 0.50 or less, still more preferably 0.020 or more and 0.30 or less, even still more preferably 0.012 or more and 0.30 or less.

In the catalyst composition for hydrogenation of the present embodiment, from a viewpoint of a catalyst composition for hydrogenation having high hydrogenation activity and a small change in the molecular weight distribution of the polymer before and after hydrogenation, the content of a component larger than 12 µm (component that does not pass through mesh having a mesh size of 12 µm, hereinafter, referred to as "a filtration residue") is preferably 0.1% by mass or more and less than 0.6% by mass. The content is more preferably in the range of 0.12% by mass or more and 0.55% by mass or less, still more preferably 0.15% by mass or more and 0.50% by mass or less.

When the content of the filtration residue is 0.1% by mass or more, excessive reaction of the components (A), (B), (C), and (D), a reduction in the hydrogenation activity, a cleavage of polymer molecules, and a change in the molecular weight distribution before and after hydrogenation tend to be reduced. In contrast, when the content of the filtration residue is less than 0.6% by mass, reaction of the components (A), (B), (C), and (D) tends to proceed sufficiently, and high hydrogenation activity tends to be achieved.

The filtration residue can be controlled within the aforementioned range by means of the time and the shearing rate of a force application step on production of the catalyst composition for hydrogenation described below and can be measured by a method described in Examples described below. For example, setting the shearing rate to 1,000 (1/s) or more and 10,000 (1/s) or less and the mixing time to 1.0 hours or more and 80 hours or less can control the filtration residue within the range of 0% by mass or more and 2.0% by mass or less. From the viewpoint of setting the amount of the filtration residue to the aforementioned preferred range and achieving higher hydrogenation activity, the shearing rate per throughput in the force application step is controlled to preferably 2,500 (1/kg·s) or more and 22,000 (1/kg·s) or less, more preferably 2,700 (1/kg·s) or more and 20,000 (1/kg·s) or less, still more preferably 2,900 (1/kg·s) or more and 18,000 (1/kg·s) or less. A shearing rate per throughput of 2,500 (1/kg·s) or more tends to be able to impart sufficient power to a target in order to allow the reaction of the components (A), (B), (C), and (D) to proceed. A shearing rate per throughput of 22,000 (1/kg·s) or less tends to be able to suppress excessive reaction of the components (A), (B), (C), and (D), to achieve higher hydrogenation activity, and to reduce a change in the molecular weight distribution before and after the reaction.

### [Hydrogenated polymer]

The hydrogenated polymer obtained by the method for producing a hydrogenated polymer described further below is a hydrogenated conjugated diene-based polymer or a hydrogenated copolymer of a conjugated diene and an aromatic vinyl compound, without particular limitation because, when the hydrogenated polymer is used in optical applications such as lens and optical films or as an additive (or modifier) in resins required to have transparency for electronic devices, glass substitute products, and the like, the turbidity can be reduced.

In a more preferred embodiment, the turbidity measured when the hydrogenated polymer is formed into a sheet having a thickness of 2 mm is 18 or less. The sheet is placed in a quartz cell containing liquid paraffin to measure the turbidity of the hydrogenated polymer using a "HZ-1" (manufactured by Suga Test Instruments Co., Ltd., product name). The sheet having a thickness of 2 mm can be made as follows. After hydrogenating polymerization reaction, a large amount of methanol is added to the hydrogenated polymer dissolved in the solution to allow a hydrogenated polymer to precipitate. The recovered polymer is then extracted with acetone and dried in vacuo. Thereafter, the hydrogenated polymer is formed into a sheet having a thickness of 2 mm using a press heated to 150°C.

In another preferred embodiment, the hydrogenated polymer is used in a sheet (also referred to as a "film") which is made by blending or laminating the polymer with another polymer such as polypropylene. In this case, the sheet having a thickness of 2 mm can be made as follows. The hydrogenated polymer is extracted with a solvent in which the hydrogenated polymer is soluble and the polymer blended is insoluble, such as chloroform, and then, is allowed to precipitate in a large amount of methanol to recover the hydrogenated polymer, which is then extracted with acetone and dried in vacuo. Thereafter, the hydrogenated polymer is formed into a sheet having a thickness of 2 mm using a press heated to 150°C.

### [Method for producing catalyst composition for hydrogenation]

In the method for producing a catalyst composition for hydrogenation of the present embodiment, the component (A), component (B), component (C), and component (D) aforementioned are mixed using a predetermined solvent as required. The method for producing a catalyst composition for hydrogenation of the present embodiment is a method for producing the catalyst composition for hydrogenation aforementioned, from the viewpoint of the high hydrogenation activity and reducing the change in the molecular weight distribution of the polymer before and after hydrogenation, and includes a force application step of applying a shearing force at a shearing rate of 1,000 (1/s) or more at least to the component (A), and a mixing step of mixing the component (B) to the component (A) at least during or after the force application step.

Example of an apparatus for applying a shearing force in the force application step include, but are not limited to, stirrers, homogenizers including emulsifiers, and pumps.

From the viewpoint of the high hydrogenation activity or a low degree of filter clogging in an extruder upon production of a hydrogenated unsaturated double bond-containing compound, the shearing rate is set to 1,000 (1/s) or more, preferably 5,000 (1/s) or more, more preferably 8,000 (1/s) or more. The term "shearing rate" herein means a shearing rate at a site at which the shearing rate of an apparatus for applying a shearing force becomes the maximum. For example, the shearing rate (Vs) of an apparatus including a rotor (rotation portion) that rotates at a constant rate and a stator (fixed portion) is obtained by dividing the peripheral velocity (Vu) of the rotor by a minimum gap (d) between the rotor and the stator (Vs (1/s) = Vu/d). The peripheral velocity of a rotor increases toward the outer side thereof. Thus, if the gap (d) is constant independent of the place in the apparatus, a value obtained by dividing the peripheral velocity of the outermost side of the rotor by (d) is defined as a shearing rate in the present embodiment.

From the viewpoint of the high hydrogenation activity and a small change in the molecular weight distribution of the polymer before and after the hydrogenation step, the time for the force application step is preferably 1.0 hours or more and within 72 hours, more preferably 3.0 hours or more and within 48 hours, and still more preferably 4.0 hours or more and within 24 hours.

During the force application step, from the viewpoint of the high hydrogenation activity, the temperature is set to preferably 50°C or less, more preferably 40°C or less, still more preferably 35°C or less, even still more preferably 30°C or less.

The component (A) is preferably pulverized by a shearing force by the force application step.

From the viewpoint of the high hydrogenation activity of the catalyst composition for hydrogenation at the initial stage of preparation and after storage, and a low degree of filter clogging in an extruder upon preparation and production of a hydrogenated unsaturated double bond-containing compound, a mixing step of mixing the component (B) to the component (A) at least during or after the force application step is preferably carried out.

From the viewpoint of the high hydrogenation activity and a small change in the molecular weight distribution of the polymer before and after hydrogenation, the force application step is a step of applying a shearing force at a shearing rate of 1,000 (1/s) or more to a mixture of at least the component (A) and component (C) and the mixing step is a step of mixing the component (B) to the mixture described above at least during or after the force application step.

From the viewpoint of the high hydrogenation activity and a small change in the molecular weight distribution of the polymer before and after hydrogenation, it is more preferred that the force application step be a step of applying a shearing force at a shearing rate of 1,000 (1/s) or more to a mixture of at least the component (A) and component (C) and the mixing step be a step of mixing the component (D) to the mixture described above at least during or after the force application step and then mixing the component (B) to the mixture.

From the viewpoint of increasing the hydrogenation activity both at the initial stage of preparation and after storage and achieving a low degree of filter clogging in an extruder upon preparation and production of a hydrogenated unsaturated double bond-containing compound, it is still more preferred that the force application step be a step of applying a shearing force at a shearing rate of 1,000 (1/s) or more to a mixture of the component (A), component (C), and component (D) and the mixing step be a step of mixing the component (B) to the mixture described above at least during or after the force application step.

The catalyst composition for hydrogenation may be prepared in advance in a catalyst tank separately to a reaction system for a target to be hydrogenated and then introduced into the reaction system including the target to be hydrogenated described below. Alternatively, the components of the catalyst composition for hydrogenation may be individually introduced into the reaction system. The catalyst composition for hydrogenation obtained by the production method of the present embodiment, which has excellent storage stability, is suited to a method in which the catalyst composition for hydrogenation is first prepared in a separate catalyst tank and then introduced into the reaction system.

When the target to be hydrogenated is a conjugated diene polymer or a copolymer of a conjugated diene and a vinyl aromatic hydrocarbon and the polymer or copolymer is produced by living anionic polymerization in which an organic alkali metal or an organic alkali earth metal is used as the initiator, a part or all of the active ends of the polymer or copolymer can also be used as the component (B) on introduction of the components of the catalyst composition for hydrogenation to the reaction system of the hydrogenation step. The component (B), similarly to the initiator described above, is preferably an organic alkali metal or organic alkali earth metal, more preferably an organolithium compound.

Furthermore, before hydrogenation and after the polymerization of the target polymer or copolymer to be hydrogenated, a part or all of the active ends may be deactivated.

In the case of individually introducing the components of the catalyst composition for hydrogenation to the reaction system, if a deactivator for the active ends of the target polymer or copolymer to be hydrogenated is present in an excess amount in the reaction system, the excess amount may also be considered as the component (D) or as a part of the component (D). In such a case, the aforementioned content ratio ((D)/(A)) (molar ratio) is calculated by considering the excess amount of deactivator as the component (D).

When the catalyst composition for hydrogenation is produced in advance in a catalyst tank separately to the reaction system for the target to be hydrogenated, the atmosphere may be an inert atmosphere or a hydrogen atmosphere. The producing temperature and the storage temperature of the catalyst composition for hydrogenation are preferably in the range of -50°C or more and 50°C or less, more preferably in the range of -20°C or more and 30°C or less.

When the catalyst composition for hydrogenation is produced in advance in a catalyst tank separately to the reaction system for the target to be hydrogenated, it is suitable that the component (A), component (B), component (C), and component (D) constituting the catalyst composition for hydrogenation be used as a solution dissolved in an inert organic solvent because the solution is easier to handle. As the inert organic solvent used in the case where the components are used as a solution, a solvent that does not react with any of participants in the hydrogenation reaction is preferably used. The solvent is more preferably the same as the solvent used in the hydrogenation reaction.

When the catalyst composition for hydrogenation is produced in advance in a catalyst tank separately to the reaction system for the target to be hydrogenated, the prepared catalyst composition for hydrogenation is transferred to the reactor of hydrogenation (hydrogenation tank) in which the target to be hydrogenated is contained. In this case, from the viewpoint of the high hydrogenation activity, the transferring is preferably carried out under a hydrogen atmosphere. The temperature for transferring is preferably -30°C or more and 100°C or less, more preferably -10°C or more and 50°C or less, from the viewpoint of the high hydrogenation activity and suppression of the yellowing of a hydrogenated polymer. Additionally, from the viewpoint of the high hydrogenation activity, the catalyst composition for hydrogenation is preferably added to the target to be hydrogenated immediately before hydrogenation reaction.

It is preferred that the mixing ratio of the respective components for exhibiting a high hydrogenation activity and hydrogenation selectivity be a ratio of the number of moles of the metal of the component (B) and the number of moles of the metal (Ti) of the component (A) (hereinafter, "Metal (B)/Metal (A) molar ratio") in the range of about 20 or less. Selecting the mixing ratio of the component (A) to the component (B) so as to allow the Metal (B)/Metal (A) molar ratio to be in the range of 0.5 or more and 10 or less is more suitable because the hydrogenation activity of the catalyst composition for hydrogenation is enhanced.

When the target to be hydrogenated is a living polymer obtained by living anionic polymerization, the living ends serve as a reducing agent. Thus, when hydrogenating a polymer having living active ends, from a viewpoint of achieving the aforementioned optimum Metal (B)/Metal (A) molar ratio and stable hydrogenation reaction over a longer period, it is more preferred to deactivate the living active ends with various compounds having active hydrogen, an acid or a halogen (collectively referred to as "deactivators").

Examples of the compound having active hydrogen include, but are not limited to, water; alcohols, such as methanol, ethanol, n-propanol, n-butanol, sec-butanol, t-butanol, 1-pentanol, 2-pentanol, 3-pentanol, 1-hexanol, 2-hexanol, 3-hexanol, 1-heptanol, 2-heptanol, 3-heptanol, 4-heptanol, octanol, nonanol, decanol, undecanol, lauryl alcohol, allyl alcohol, cyclohexanol, cyclopentanol, and benzyl alcohol; and phenols, such as phenol, o-cresol, m-cresol, p-cresol, p-allyl phenol, 2,6-di-t-butyl-p-cresol, xylenol, dihydroanthraquinone, dihydroxycoumarin, 1-hydroxyanthraquinone, m-hydroxybenzyl alcohol, resorcinol, and leucoaurine.

Examples of the acid include, but are not limited to, organic carboxylic acids, such as acetic acid, propionic acid, butyric acid, isobutyric acid, pentanoic acid, hexanoic acid, heptanoic acid, decalin acid, myristic acid, stearic acid, behenic acid, and benzoic acid.

Examples of the compound having a halogen include, but are not limited to, benzyl chloride, trimethylsilyl chloride (bromide), t-butylsilyl chloride (bromide), methyl chloride (bromide), ethyl chloride (bromide), propyl chloride (bromide), and n-butyl chloride (bromide).

One of these deactivators may be used singly, or two or more of these may be used in combination.

### [Method for producing hydrogenated polymer]

The method for producing a hydrogenated polymer of the present embodiment has a hydrogenation step of hydrogenating an unsaturated double bond-containing polymer (hereinafter, also referred to as a "target to be hydrogenated") by means of the catalyst composition for hydrogenation of the present embodiment, wherein the polymer is a conjugated diene-based polymer or a copolymer of a conjugated diene and a vinyl aromatic compound.

The catalyst composition for hydrogenation of the present embodiment can also be applied in selective hydrogenation of the olefinically unsaturated double bonds of a conjugated diene polymer or of a copolymer of a conjugated diene and an olefinic monomer. The term "selective hydrogenation" referred to herein means selectively hydrogenating the olefinically unsaturated double bonds of a conjugated diene moiety of a conjugated diene polymer or of a copolymer of a conjugated diene and an olefinic monomer. When a vinyl aromatic compound, for example, is used as the olefinic monomer, selective hydrogenation means that the carbon-carbon double bonds of the aromatic ring are not substantially hydrogenated. Products having selectively-hydrogenated olefinically unsaturated double bonds of a conjugated diene polymer or of a copolymer of a conjugated diene and an olefinic monomer are industrially useful for elastic bodies and thermoplastic elastic bodies.

The target to be hydrogenated is a conjugated diene-based polymer or a copolymer of a conjugated diene, and examples of the conjugated diene generally include conjugated dienes having 4 to 12 carbon atoms. Examples thereof include, but are not limited to, 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, and 3-butyl-1,3-octadiene. From the viewpoint of obtaining an elastic body that can be advantageously developed industrially and that has excellent physical properties, 1,3-butadiene and isoprene are preferred, and 1,3-butadiene is more preferred.

The microstructure of the butadiene moiety has 1,2-bonds and 1,4-bonds (cis + trans), and the catalyst composition for hydrogenation of the present embodiment can quantitatively hydrogenate either of these. The structure and hydrogenation ratio of the compound hydrogenated by the catalyst composition for hydrogenation of the present embodiment can be measured by 1H-NMR.

By the hydrogenation step using the catalyst composition for hydrogenation of the present embodiment, the 1,2-bonds and the 1,4-bonds of the butadiene moiety and the 1,2-bond and 3,4-bond side chains of the isoprene moiety can be selectively hydrogenated. The catalyst composition for hydrogenation of the present embodiment, in which the 1,2-bonds of the butadiene moiety have high hydrogenation activity, is suitable for hydrogenating a polymer having a content of the 1,2-bonds in the butadiene moiety therein of 60 mol% or more. When the catalyst composition for hydrogenation of the present embodiment is used and the preferred hydrogenating conditions described below are selected, hydrogenation of the carbon-carbon double bonds of the vinyl-substituted aromatic hydrocarbon unit (aromatic ring) in the copolymer substantially does not occur.

The hydrogenation reaction using the catalyst composition for hydrogenation prepared by the production method of the present embodiment is preferably carried out by bringing a target to be hydrogenated into contact with hydrogen in a solution in which the target is dissolved in an inert organic solvent. The term "inert organic solvent" referred to herein means a solvent that does not react with any of the participants in the hydrogenation reaction.

Examples of the inert organic solvent include, but are not limited to, aliphatic hydrocarbons, such as n-pentane, n-hexane, n-heptane, and n-octane; alicyclic hydrocarbons, such as cyclohexane, cycloheptane, and cycloheptane; and ethers, such as diethyl ether and tetrahydrofuran. One of these may be used singly, or two or more of these may be used as a mixture. Further, aromatic hydrocarbons, such as benzene, toluene, xylene, and ethylbenzene may also be used as the insoluble organic solvent only when the aromatic double bonds are not hydrogenated under the selected hydrogenation conditions.

The hydrogenation step can be carried out by maintaining the target solution to be hydrogenated at a predetermined temperature under a hydrogen or inert atmosphere, adding the catalyst composition for hydrogenation thereto under stirring or without stirring, and then introducing hydrogen gas thereto to increase the pressure to a predetermined level. The term "inert atmosphere" means an atmosphere, such as nitrogen, helium, neon, and argon, which does not react with any of the participants in the hydrogenation reaction. An air or oxygen atmosphere is not preferred because the catalyst composition for hydrogenation is oxidized to thereby lead to deactivation.

The catalyst composition for hydrogenation prepared by the production method of the present embodiment, which has excellent storage stability, is suitable for a hydrogenation method in which the target to be hydrogenated and the catalyst composition for hydrogenation are continuously supplied to the reactor in which hydrogenation is carried out (continuous hydrogenation). The catalyst composition for hydrogenation of the present embodiment also can be used in a batch hydrogenation method.

The amount of the catalyst composition for hydrogenation to be added in the hydrogenation step is preferably in the range of 0.001 mmol or more and 20 mmol or less per 100 g of the target to be hydrogenated, in terms of moles of the component (A). With the amount to be added within this range, when the target to be hydrogenated is a copolymer of a conjugated diene and a vinyl-substituted aromatic hydrocarbon, an extremely high hydrogenation selectivity tends to be achieved because the olefinically unsaturated double bonds can be preferentially hydrogenated, and hydrogenation of the double bonds of the aromatic ring in the copolymer substantially does not occur.

Since the amount of the catalyst composition for hydrogenation to be added is 20 mmol or less per 100 g of the target to be hydrogenated, in terms of moles of the component (A), no excess amount of the catalyst composition for hydrogenation will be used, which does not become uneconomical. Thus, no disadvantages in the steps will occur, for example, deashing and removal of the catalyst composition for hydrogenation after the hydrogenation reaction will not be more complex. The preferred amount of the catalyst composition for hydrogenation to be added for quantitatively hydrogenating unsaturated double bonds of a conjugated diene unit of a polymer under selected conditions is preferably in the range of 0.01 mmol or more and 5.0 mmol or less per 100 g of the target to be hydrogenated, in terms of moles of the component (A).

In the hydrogenation step, gaseous hydrogen is preferably introduced into the hydrogenation reaction tank. The hydrogenation step is more preferably carried out under stirring, and this reaction tends to enable the introduced hydrogen to be sufficiently and quickly brought into contact with the target to be hydrogenated.

The hydrogenation step can be carried out in the temperature range of 0°C or more and 200°C or less. With a temperature of 0°C or more, the hydrogenation speed does not become slow, and a large amount of the catalyst composition for hydrogenation is not required, which is economically efficient. In contrast, with a temperature of 200°C or less, side reactions, decomposition, and gelation tend to be easily suppressed, the catalyst composition for hydrogenation is unlikely to be deactivated, and thus, a reduction in the hydrogenation activity tends to be suppressed. A more preferred temperature range is a temperature range of 20°C or more and 180°C or less.

The hydrogen pressure in the hydrogenation step is preferably 1.0 kgf/cm² or more and 100 kgf/cm² or less. When the hydrogen pressure is 1.0 kgf/cm² or more, the hydrogenation speed does not become slow, and thus, the hydrogenation rate tends to become sufficient. A hydrogen pressure of 100 kgf/cm² or less is preferred because the hydrogenation reaction is not almost completed at the same time as pressure rising, and unnecessary side reactions or gelation tend to be suppressed. A more preferred hydrogen pressure is 2.0 kgf/cm² or more and 30 kgf/cm² or less, and an optimal hydrogen pressure is selected based on the correlation with the amount of the catalyst composition for hydrogenation to be added and the like. Substantially, it is preferred that a higher hydrogen pressure be selected to carry out the hydrogenation reaction, as the amount of the catalyst composition for hydrogenation decreases. In addition, the hydrogenation reaction time is preferably several seconds to 50 hours. The hydrogenation reaction time and the hydrogenation pressure are appropriately selected in the ranges described above, depending on a desired hydrogenation rate.

By the aforementioned hydrogenation step, any desired hydrogenation rate can be obtained, depending on purposes, for the olefinically unsaturated double bonds of an olefin compound and for the olefinically unsaturated double bonds of a conjugated diene copolymer and a copolymer of a conjugated diene and a vinyl aromatic hydrocarbon.

After the hydrogenation reaction has been carried out using the catalyst composition for hydrogenation of the present embodiment, a hydrogenated product (product obtained after hydrogenating a target to be hydrogenated) can be easily separated from a solution containing the hydrogenated product by chemical or physical means such as distillation or precipitation. In particular, when the target to be hydrogenated is a polymer, a residue of the catalyst composition for hydrogenation can be removed from the polymer solution subjected to the hydrogenation reaction, as necessary, and the hydrogenated polymer can be then separated from the solution.

Examples of the separation method include, but are not particularly limited to, a method including adding a polar solvent serving as a poor solvent to the hydrogenated polymer, such as acetone or alcohol, to the reaction solution after the hydrogenation to precipitate the hydrogenated polymer and then recovering the polymer, a method including adding the reaction solution after the hydrogenation to boiling water under stirring, and then distilling to recover the hydrogenated polymer together with the solvent, and a method including directly heating the reaction solution to distill the solvent off.

### Examples

Hereinbelow, the present embodiment will be further described based on Examples, but the present embodiment is not limited to the following Examples. First, measurement methods of physical properties and evaluation and criteria for evaluation will be described below.

### [Component (A)]

To a 1 L reactor sufficiently dried and sufficiently purged with helium, 20 g (0.105 mol) of titanium tetrachloride and 100 mL of 1,2-dimethoxyethane were added. A 1,2-dimethoxyethane solution (200 mL) of sodium cyclopentadienide (0.210 mol) was added under various conditions of temperatures and addition times shown below. The mixture was allowed to return to room temperature after an hour, and the solid content was filtered off in nitrogen. Then, the filtrate was evaporated to dryness by an evaporator to obtain the component (A), which was a compound comprising crystalline titanocene dichloride as a main component. Compounds comprising the following respective titanocene dichlorides (A-1) to (A-5) each having a different chlorine concentration as a main component were obtained under each of the conditions described above. As (A-6) and (A-7), the following components (A) were prepared.
(A-1) Chlorine concentration = 28.52% by mass, temperature -20°C, and addition time 60 minutes
(A-2) Chlorine concentration = 28.45% by mass, temperature -20°C, and addition time 35 minutes
(A-3) Chlorine concentration = 28.40% by mass, temperature -25°C, and addition time 60 minutes
(A-4) Chlorine concentration = 28.30% by mass, temperature -25°C, and addition time 50 minutes
(A-5) Chlorine concentration = 28.20% by mass, temperature -10°C, and addition time 50 minutes
(A-6) bis(η(5)-cyclopentadienyl)titanium diphenyl
(A-7) bis(η(5)-1,3-dimethylcyclopentadienyl)titanium dichloride

The chlorine concentration of the component (A) shown above was measured by a potentiometric titration method. To the dichlorotitanocene obtained above, a sodium hydroxide solution was added, and the mixture was warmed. Then, nitric acid was added thereto to obtain a homogeneous solution. Thereafter, nitric acid and a gelatin solution were added to the solution, and the chlorine concentration of the component (A) was determined by potentiometric titration using a silver nitrate solution.

### [Component (B)]

The components (B) used are shown below.
(B-1): Triethyl aluminum
(B-2): sec-Butyl lithium
(B-3): Sodium naphthalene
(B-4): n-Butyl potassium
(B-5): Ethyl magnesium chloride
(B-6): Diphenyl zinc
(B-7): Sodium aluminum hydride

### [Component (C)]

The components (C) used are shown below.
(C-PB): Polybutadiene Ricon 142 (manufactured by Ricon Corp., fraction of the olefinically unsaturated double bond content of side chains based on the total olefinically unsaturated double bond content: 0.55, number average molecular weight: 4,000) was used.
(C-1): Myrcene
(C-2): Isoprene
(C-3): 1,7-Octadiene

### [Component (D)]

The components (D) used are shown below.
(D-1): Tetrahydrofuran
(D-2): N,N,N',N'-Tetramethylethylenediamine
(D-3): Ethylene glycol dimethyl ether
(D-4): N,N,N',N'-Tetraethylethylenediamine

A cyclohexane solution of the catalyst composition for hydrogenation obtained in each of Examples and Comparative Examples was allowed to pass through Teflon (R) mesh (manufactured by Clever Corporation, product name, mesh size: 12 µm) to measure and determine the mass of the residue amount. The results are shown in Table 1.

### [Polymer for hydrogenation]

The polymer for hydrogenation was prepared as follows.

To an autoclave, 400 kg of cyclohexane, 15 kg of styrene monomers, 110 g of n-butyl lithium, and 2.8 kg of tetrahydrofuran were added and polymerized for 3 hours at 55°C under stirring. Then, 70 kg of 1,3-butadiene monomers was added, and the mixture was polymerized for 3 hours at 60°C. In the end, 15 kg of styrene monomers were added, and the mixture was polymerized for 3 hours at 60°C. After polymerization, the active ends were deactivated with water to obtain a styrene-butadiene-styrene copolymer (polymer for hydrogenation).

The obtained styrene-butadiene-styrene copolymer was a complete block copolymer, having a styrene content of 30% by mass, a 1,2-vinyl bond content of the butadiene unit of 50 mol%, and a weight average molecular weight measured by GPC below (molecular weight in terms of polystyrene) of about 60,000. The styrene content and 1,2-vinyl bond content of the butadiene unit were measured by NMR used for measurement of the hydrogenation ratio described below.

The weight average molecular weight described above was measured by a GPC measurement apparatus and under the conditions as follows.
Measurement apparatus: LC-10 (manufactured by SHIMADZU CORPORATION)
Column: two TSKgelGMHXL (4.6 mm ID × 30 cm)
Solvent: Tetrahydrofuran
Sample for calibration curve: commercially available standard polystyrene (manufactured by TOSOH CORPORATION), measured at 10 points

### (Evaluation 1) Hydrogenation activity

Hydrogenation was carried out using a catalyst composition for hydrogenation obtained in each of Examples and Comparative Examples under the following conditions. When each of the solutions of the polymer for hydrogenation obtained above was hydrogenated in a 30-minute batch at a hydrogen pressure of 7 kgf/cm², at 90°C in Examples 1 to 45 and Comparative Examples 1 to 4, 6, and 7, or at 130°C in Comparative Example 5 because sufficient hydrogenation activity was not achieved in Comparative Example 2, using the catalyst composition at 40 ppm, 50 ppm, 60 ppm, 70 ppm, 80 ppm, 90 ppm, or 100 ppm in terms of mass of Ti comprised in the component A, the amount of the catalyst composition added at which the hydrogenation ratio of the conjugated diene reached 99.0% or more was determined. Based on the determined amount of the component A added, the hydrogenation activity was evaluated in accordance with the following criteria. In the case where the hydrogenation ratio of 99.0% or more was achieved even with a small amount of the catalyst composition added, the composition was determined to have high activity and be excellent.
6: The hydrogenation ratio reached 99.0% or more at an amount added of 40 ppm.
5: The hydrogenation ratio did not reach 99.0% or more at an amount added of 40 ppm, and the hydrogenation ratio reached 99.0% or more at 50 ppm.
4: The hydrogenation ratio did not reach 99.0% or more at an amount added of 50 ppm, and the hydrogenation ratio reached 99.0% or more at 60 ppm.
3: The hydrogenation ratio did not reach 99.0% or more at an amount added of 60 ppm, and the hydrogenation ratio reached 99.0% or more at 70 ppm.
2: The hydrogenation ratio did not reach 99.0% or more at an amount added of 70 ppm, and the hydrogenation ratio reached 99.0% or more at 80 ppm.
1: The hydrogenation ratio did not reach 99.0% or more even at an amount added of 80 ppm.

A composition having a rating of 2 or more has no problem in practical use, but the polymer is likely to be clouded due to the catalyst metal. Thus, in the case where the obtained polymer is used for optical applications and the like, a smaller amount added is preferred, and hydrogenation can be desirably carried out such that a rating of 3 or more is provided. Such polymers can be used in optical applications such as lens and optical films or as an additive in resins required to have transparency for electronic devices, glass substitute products, and the like.

The hydrogenation ratio of unsaturated groups in the conjugated diene was measured by nuclear magnetic resonance spectrometry analysis (NMR) under the following conditions. After the hydrogenation reaction, the hydrogenated polymer was allowed to precipitate in a large amount of methanol to recover the polymer. The polymer was then extracted with acetone, dried in vacuo, and subjected to ¹H-NMR measurement.
Measurement apparatus: JNM-LA400 (manufactured by JEOL Ltd.)
Solvent: Deuterated chloroform
Measurement sample: Samples extracted from the aforementioned polymer for hydrogenation before and after hydrogenation
Sample concentration: 50 mg/mL
Observation frequency: 400 MHz
Chemical shift standard: TMS (tetramethylsilane)
Pulse delay: 2.904 seconds
Number of scans: 64 times
Pulse width: 45°
Measurement temperature: 26°C

### (Evaluation 2) Change in molecular weight distribution of polymer before and after hydrogenation

The molecular weight distribution of the polymer was determined from weight average molecular weight (Mw)/number average molecular weight (Mn) = Mw/Mn obtained by gel permeation chromatography (GPC) under the following conditions.

The change in the molecular weight distribution before and after hydrogenation is preferably as small as possible.
⊚: The amount of change is less than 2.0%.
○: The amount of change is 2.0% or more and 4.0% or less.
Δ: The amount of change is 4.0% or more and 6.0% or less.
×: The amount of change is 6.0% or more.

### (Evaluation 3) Turbidity of polymer

Hydrogenation reaction was carried out using the catalyst composition for hydrogenation obtained in each of Examples and Comparative Examples, and then, the turbidity of each polymer was measured by a turbidity meter as follows. After the hydrogenation reaction, the hydrogenated polymer was allowed to precipitate in a large amount of methanol to recover the polymer. The polymer was then extracted with acetone and dried in vacuo. Thereafter, the polymer was formed into a sheet having a thickness of 2 mm using a press heated to 150°C, and the turbidity thereof was measured in a quartz cell containing liquid paraffin.
Measurement apparatus: HZ-1 (manufactured by Suga Test Instruments Co., Ltd., product name)
Measurement sample: The above sheet having a thickness of 2 mm formed from a polymer hydrogenated with a minimum amount of the catalyst added of each catalyst composition for hydrogenation

### (Examples 1 to 5, Examples 8 to 38, 40 to 45, and Comparative Examples 1 to 6) [Examples 20, 23, 24, 27 and 45 for reference]

The component (A), component (C), and component (D) were mixed in accordance with the type, amount, and ratio as shown in Table 1. To the mixture, a shearing force was applied for six hours by the following force application step and in accordance with the following conditions. Then, the component (B) was added to the mixture, and subsequently, a shearing force was applied thereto for 20 minutes.

### (Example 6)

The component (A), component (C), and component (D) were mixed in accordance with the type, amount, and ratio as shown in Table 1. To the mixture, a shearing force was applied for 30 hours by the following force application step. Then, the component (B) was added to the mixture, and subsequently, a shearing force was applied thereto for 20 minutes.

### (Example 7)

The component (A), component (C), and component (D) were mixed in accordance with the type, amount, and ratio as shown in Table 1. To the mixture, a shearing force was applied for 3 hours by the following force application step. Then, the component (B) was added to the mixture, and subsequently, a shearing force was applied thereto for 20 minutes.

### (Example 39)

The component (A) and component (C) were mixed in accordance with the type, amount, and ratio as shown in Table 1. To the mixture, a shearing force was applied for six hours by the following force application step. Then, the component (D) was added to the mixture, to which a shearing force was applied for 10 minutes. Thereafter, the component (B) was added to the mixture, and subsequently, a shearing force was applied thereto for 20 minutes.

In Examples 1 to 45 and Comparative Examples 1 to 6, the mixing system was continuously cooled to maintain the temperature of the system at 35°C or less.

### [Force application step]

### (Examples 1 to 7, 39 to 45, and Comparative Examples 1 to 6)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 3000 rpm, shearing rate: 8750 (1/s)

### (Examples 8)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 12000 rpm, shearing rate: 35000 (1/s)

### (Examples 9)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 11000 rpm, shearing rate: 32083 (1/s)

### (Examples 10)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 10500 rpm, shearing rate: 30625 (1/s)

### (Examples 11)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 10000 rpm, shearing rate: 29167 (1/s)

### (Examples 12)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 9500 rpm, shearing rate: 27708 (1/s)

### (Examples 13)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 9000 rpm, shearing rate: 26250 (1/s)

### (Examples 14, 20 to 38)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 1500 rpm, shearing rate: 4375 (1/s)

### (Examples 15)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 1450 rpm, shearing rate: 4229 (1/s)

### (Examples 16)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 1400 rpm, shearing rate: 4083 (1/s)

### (Examples 17)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 1350 rpm, shearing rate: 4083 (1/s)

### (Examples 18)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 1300 rpm, shearing rate: 3792 (1/s)

### (Examples 19)

Homogenizer: HOMO MIXER MARK II (PRIMIX Corporation, product name, 0.2 kW)
Throughput: 1.5 kg of a cyclohexane solution having a component (A) concentration of 3.5% by mass
Number of revolutions: 1200 rpm, shearing rate: 3500 (1/s)

It has been found that use of the catalyst composition for hydrogenation prepared in each of Examples 1 to 45 (Examples 20, 23, 24, 27 and 45 for reference) can increase the hydrogenation activity and reduce the change in the molecular weight distribution of the polymer before and after the hydrogenation step.

When the cyclopentadienyl groups of the titanocene compound had a substituent(s), the slow formation reaction of the catalyst composition caused a large amount of the filtration residue, and thus, sufficient hydrogenation activity could not be exerted. Accordingly, the amount of the catalyst added required to achieve a high hydrogenation ratio was increased, and the transparency was reduced due to metal particles, derived from the catalyst, which remained in the polymer. An increase in the temperature in order to increase the hydrogenation activity cut the molecular chain to thereby lead to a significant change in the molecular weight distribution. In contrast, the reaction proceeded rapidly when no substituent exist, and thus, the filtration residue was reduced depending on the time of the force application step, the shearing rate, and the composition ratio of the components (A), (B), (C), and (D). In this case, it has been found that the activity was also reduced.

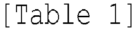

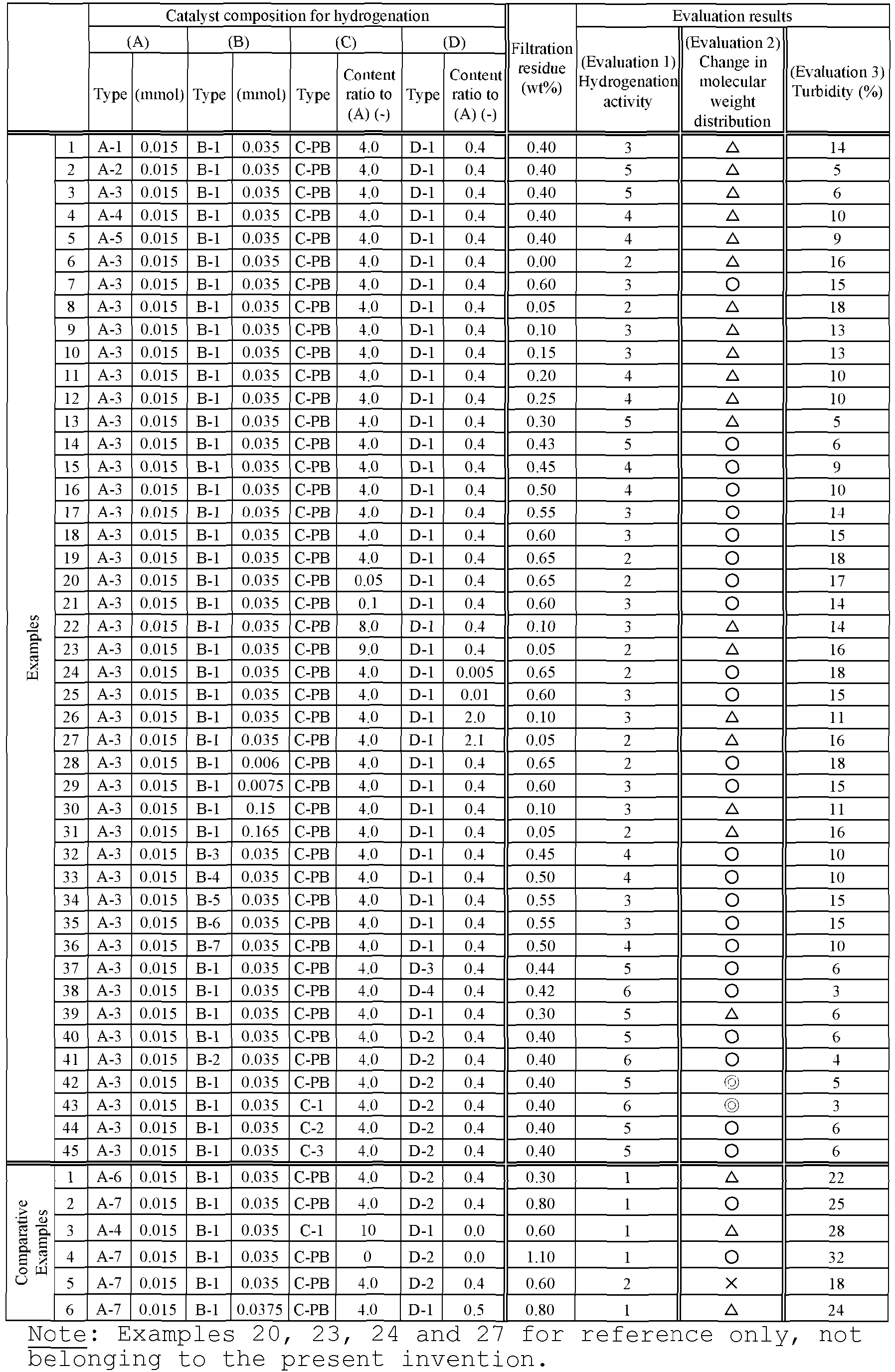

### Industrial Applicability

The catalyst composition for hydrogenation obtained by the method for producing a catalyst composition for hydrogenation according to the present invention has industrial applicability as a catalyst composition for hydrogenation, which is used in a hydrogenation step for producing a hydrogenated polymer compound used as a modifier for polypropylene or polyethylene.

## Claims

1. A catalyst composition for hydrogenation comprising:
titanocene dichloride (A);
an organometal compound (B) comprising one or two or more elements selected from the group consisting of Li, Na, K, Mg, Zn, Al, and Ca;
an unsaturated compound (C); and
a polar compound (D) selected from alcohol compounds, ether compounds, thioether compounds, ketone compounds, sulfoxide compounds, carboxylic acid compounds, carboxylate compounds, aldehyde compounds, lactam compounds, lactone compounds, amine compounds, amide compounds, nitrile compounds, epoxy compounds and oxime compounds,
wherein a molar ratio of the unsaturated compound (C) to the titanocene dichloride (A) is 0.1 or more and 8.0 or less,
a molar ratio of the polar compound (D) to the titanocene dichloride (A) is 0.01 or more and 2.0 or less, and
wherein the unsaturated compound (C) is an unsaturated polymer (C1) having a number average molecular weight of more than 400 which has a ratio of an olefinically unsaturated double bond content of a side chain comprised in the unsaturated compound (C1) to a total olefinically unsaturated double bond content of the unsaturated compound (C1) of 0.25 or more and 1.00 or less, or
is an unsaturated compound (C2) having a molecular weight of 400 or less, which is a monomer selected from conjugated dienes having 4 to 12 carbon atoms, monoterpene, vinyl aromatic compounds, norbornadiene, cyclopentadiene, cyclohexadiene, 2,3-dihydrodicyclopentadiene and acetylenes, or a polymer prepared by polymerizing one or more of these monomers, or
is a combination of the unsaturated polymer (C1) and the unsaturated compound (C2).

2. The catalyst composition for hydrogenation according to claim 1, wherein the titanocene dichloride (A) comprises a chlorine concentration of 28.29% by mass or more and 28.51% by mass or less.

3. The catalyst composition for hydrogenation according to claim 1 or 2, wherein a content of a component that does not pass through a mesh having a mesh size of 12 µm is 0.1% by mass or more and less than 0.6% by mass.

4. A method for producing the catalyst composition for hydrogenation according to any one of claims 1 to 3, comprising:
a force application step of applying a shearing force at a shearing rate of 1,000 (1/s) or more at least to the titanocene dichloride (A); and
a mixing step of mixing the organometal compound (B) into the titanocene dichloride (A) at least during or after the force application step.

5. The method for producing the catalyst composition for hydrogenation according to claim 4, wherein
the force application step is a step of applying a shearing force at a shearing rate of 1,000 (1/s) or more at least to a mixture of the titanocene dichloride (A) and the unsaturated compound (C), and
the mixing step is a step of mixing the organometal compound (B) into the mixture at least during or after the force application step.

6. The method for producing the catalyst composition for hydrogenation according to claim 4 or 5, wherein
the force application step is a step of applying a shearing force at a shearing rate of 1,000 (1/s) or more at least to a mixture of the titanocene dichloride (A) and the unsaturated compound (C), and
the mixing step is a step of mixing the polar compound (D) into the mixture at least during or after the force application step and then mixing the organometal compound (B) thereinto.

7. The method for producing the catalyst composition for hydrogenation according to any one of claims 4 to 6, wherein the organometal compound (B) is an organolithium compound.

8. A method for producing a hydrogenated polymer, comprising a hydrogenation step of hydrogenating the olefinically unsaturated double bonds of a conjugated diene-based polymer or a copolymer of a conjugated diene and a vinyl aromatic compound with the catalyst composition for hydrogenation according to any one of claims 1 to 3.

9. The method according to claim 8, wherein the obtained hydrogenated polymer has a turbidity when formed into a sheet having a thickness of 2 mm, measured as described in "(Evaluation 3) turbidity of Polymer" in the description, of 18 or less.

## Patentansprüche

1. Katalysatorzusammensetzung zum Hydrieren, umfassend:
Titanocendichloride (A);
eine Organometallverbinduung (B), welche ein oder zwei oder mehrere Elemente umfasst, ausgewählt aus der Gruppe bestehend aus Li, Na, K, Mg, Zn, Al und Ca;
eine ungesättigte Verbindung (C); und
eine polare Verbindung (D), die aus Alkoholverbindungen, Etherverbindungen, Thioetherverbindungen, Ketonverbindungen, Sulfoxidverbindungen, Carbonsäureverbindungen, Carboxylatverbindungen, Aldehydverbindungen, Lactamverbindungen, Lactonverbindungen, Aminverbindungen, Amidverbindungen, Nitrilverbindungen, Epoxidverbindungen und Oximverbindungen ausgewählt ist,
wobei das Molverhältnis der ungesättigten Verbindung (C) zu dem Titanocendichlorid (A) 0,1 oder mehr und 8,0 oder weniger ist,
das Molverhältnis der polaren Verbindung (D) zu dem Titanocendichloride (A) 0,01 oder mehr und 2,0 oder weniger ist, und
wobei die ungesättigte Verbindung (C) ein ungesättigtes Polymer (C1) mit einem Zahlenmittel des Molekulargewichts von mehr als 400 ist, welches ein Verhältnis des Gehalts von olefinisch ungesättigten Doppelbindungen einer in der ungesättigten Verbindung (C1) enthaltenen Seitenkette zu dem Gehalt aller olefinisch ungesättigten Doppelbindungen der ungesättigten Verbindung (C1) von 0,25 oder mehr und 1,00 oder weniger aufweist, oder
eine ungesättigte Verbindung (C2) mit einem Molekulargewicht von 400 oder weniger ist, wobei es sich um ein Monomer handelt, das aus konjugierten Dienen mit 4 bis 12 Kohlenstoffatomen, Monoterpen, vinylaromatischen Verbindungen, Norbornadien, Cyclopentadien, Cyclohexadien, 2,3-Dihydrodicyclopentadiene und Acetylenen ausgewählt ist, oder ein Polymer, das durch Polymerisieren eines oder mehrerer dieser Monomere hergestellt wurde, oder
eine Kombination des ungesättigten Polymers (C1) und der ungesättigten Verbindung (C2) ist.

2. Katalysatorzusammensetzung zum Hydrieren nach Anspruch 1, wobei das Titanocendichlorid (A) eine Chlorkonzentration von 28,29 Massen-% oder mehr und 28,51 Massen-% oder weniger aufweist.

3. Katalysatorzusammensetzung zum Hydrieren nach Anspruch 1 oder 2, wobei der Gehalt einer Komponente, die eine Sieb mit einer Mesh-Größe von 12 µm nicht passiert, 0,1 Massen-% oder mehr und weniger als 0,6 Massen-% ist.

4. Verfahren zur Herstellung einer Katalysatorzusammensetzung zum Hydrieren nach einem der Ansprüche 1 bis 3, mit:
einem Kraftausübungsschritt, bei dem eine Scherkraft mit einer Schergeschwindigkeit von 1000 (1/s) oder mehr zumindest auf das Titanocendichlorid (A) ausgeübt wird; und
einen Mischschritt, bei dem die Organometallverbindung (B) zumindest während oder nach dem Kraftausübungsschritt in das Titanocendichlorid (A) eingemischt wird.

5. Verfahren zur Herstellung einer Katalysatorzusammensetzung zum Hydrieren nach Anspruch 4, wobei
der Kraftausübungsschritt ein Schritt ist, bei dem eine Scherkraft mit einer Schergeschwindigkeit von 1000 (1/s) oder mehr zumindest auf ein Gemisch aus dem Titanocendichlorid (A) und der ungesättigten Verbindung (C) ausgeübt wird, und
der Mischschritt ein Schritt ist, bei dem die Organometallverbindung (B) zumindest während oder nach dem Kraftausübungsschritt in das Gemisch eingemischt wird.

6. Verfahren zur Herstellung einer Katalysatorzusammensetzung zum Hydrieren nach Anspruch 4 oder 5, wobei
der Kraftausübungsschritt ein Schritt ist, bei dem eine Scherkraft mit einer Schergeschwindigkeit von 1000 (1/s) oder mehr zumindest auf ein Gemisch aus dem Titanocendichlorid (A) und der ungesättigten Verbindung (C) ausgeübt wird, und
der Mischschritt ein Schritt ist, bei dem die polare Verbindung (D) zumindest während oder nach dem Kraftausübungsschritt in das Gemisch eingemischt wird, und dann die Organometallverbindng (B) in dieses eingemischt wird.

7. Verfahren zur Herstellung einer Katalysatorzusammensetzung zum Hydrieren nach einem der Ansprüche 4 bis 6, wobei die Organometallverbindung (B) eine Organolithiumverbindung ist.

8. Verfahren zur Herstellung eines hydrierten Polymers, mit einem Hydrierungsschritt, bei dem die olefinisch ungesättigten Doppelbindungen eines Polymers auf Basis eines konjugierten Diens oder eines Copolymers aus einem konjugierten Dien und einer vinylaromatischen Verbindung mit der Katalysatorzusammensetzung zum Hydrieren nach einem der Ansprüche 1 bis 3 hydriert wird.

9. Verfahren nach Anspruch 8, wobei das erhaltene hydrierte Polymer bei Ausbildung zu einer Schicht mit einer Dicke von 2 mm eine Trübung, die wie in "(Bewertung 3) Trübung von Polymer" in der Beschreibung beschrieben gemessen wird, von 18 oder weniger aufweist.

## Revendications

1. Composition de catalyseur pour hydrogénation comprenant :
du dichlorure de titanocène (A) ;
un composé organométallique (B) comprenant un ou deux éléments ou plus choisis dans le groupe constitué de Li, Na, K, Mg, Zn, Al, et Ca ;
un composé insaturé (C) ; et
un composé polaire (D) choisi parmi les composés d'alcool, les composés d'éther, les composés de thioéther, les composés de cétone, les composés de sulfoxyde, les composés d'acide carboxylique, les composés de carboxylate, les composés d'aldéhyde, les composés de lactame, les composés de lactone, les composés d'amine, les composés d'amide, les composés de nitrile, les composés d'époxy et les composés d'oxime,
dans laquelle un rapport molaire du composé insaturé (C) au dichlorure de titanocène (A) est de 0,1 ou plus et de 8,0 ou moins,
un rapport molaire du composé polaire (D) au dichlorure de titanocène (A) est de 0,01 ou plus et de 2,0 ou moins, et
dans laquelle le composé insaturé (C) est un polymère insaturé (C1) ayant un poids moléculaire moyen en nombre de plus de 400 qui a un rapport d'une teneur en doubles liaisons à insaturation oléfinique d'une chaîne latérale comprise dans le composé insaturé (C1) à une teneur totale en doubles liaisons à insaturation oléfinique du composé insaturé (C1) de 0,25 ou plus et de 1,00 ou moins, ou
est un composé insaturé (C2) ayant un poids moléculaire de 400 ou moins, qui est un monomère choisi parmi les diènes conjugués ayant de 4 à 12 atomes de carbone, le monoterpène, les composés vinylaromatiques, le norbornadiène, le cyclopentadiène, le cyclohexadiène, le 2,3-dihydrodicyclopentadiène et les acétylènes, ou un polymère préparé par polymérisation d'un ou plusieurs de ces monomères, ou
est une combinaison du polymère insaturé (C1) et du composé insaturé (C2).

2. Composition de catalyseur pour hydrogénation selon la revendication 1, dans laquelle le dichlorure de titanocène (A) comprend une concentration de chlore de 28,29 % en masse ou plus et de 28,51 % en masse ou moins.

3. Composition de catalyseur pour hydrogénation selon la revendication 1 ou 2, dans laquelle une teneur d'un composant qui ne passe pas à travers une maille ayant une dimension de maille de 12 µm est de 0,1 % en masse ou plus et de moins de 0,6 % en masse.

4. Procédé de production de la composition de catalyseur pour hydrogénation selon l'une quelconque des revendications 1 à 3, comprenant :
une étape d'application de force consistant à appliquer une force de cisaillement à une vitesse de cisaillement de 1 000 (1/s) ou plus au moins sur le dichlorure de titanocène (A) ; et
une étape de mélange consistant à mélanger le composé organométallique (B) dans le dichlorure de titanocène (A) au moins pendant ou après l'étape d'application de la force.

5. Procédé de production de la composition de catalyseur pour hydrogénation selon la revendication 4, dans lequel
l'étape d'application de force est une étape consistant à appliquer une force de cisaillement à une vitesse de cisaillement de 1 000 (1/s) ou plus au moins sur un mélange du dichlorure de titanocène (A) et du composé insaturé (C), et
l'étape de mélange est une étape consistant à mélanger le composé organométallique (B) dans le mélange au moins pendant ou après l'étape d'application de force.

6. Procédé de production de la composition de catalyseur pour hydrogénation selon la revendication 4 ou 5, dans lequel
l'étape d'application de force est une étape consistant à appliquer une force de cisaillement à une vitesse de cisaillement de 1 000 (1/s) ou plus au moins sur un mélange du dichlorure de titanocène (A) et du composé insaturé (C), et
l'étape de mélange est une étape consistant à mélanger le composé polaire (D) dans le mélange au moins pendant ou après l'étape d'application de force et ensuite à y mélanger le composé organométallique (B).

7. Procédé de production de la composition de catalyseur pour hydrogénation selon l'une quelconque des revendications 4 à 6, dans lequel le composé organométallique (B) est un composé d'organolithium.

8. Procédé de production d'un polymère hydrogéné, comprenant une étape d'hydrogénation consistant à hydrogéner les doubles liaisons à insaturation oléfinique d'un polymère à base de diène conjugué ou d'un copolymère d'un diène conjugué et d'un composé vinylaromatique avec la composition de catalyseur pour hydrogénation selon l'une quelconque des revendications 1 à 3.

9. Procédé selon la revendication 8, dans lequel le polymère hydrogéné obtenu a une turbidité de 18 ou moins, lorsqu'il est formé en une feuille ayant une épaisseur de 2 mm, mesurée tel que décrit dans « (Évaluation 3) Turbidité du polymère » dans la description.
